# EUROPÄISCHE PATENTSCHRIFT

(11) **EP 2 949 029 B1**
(45) Veröffentlichungstag und Bekanntmachung des Hinweises auf die Patenterteilung: **06.09.2017**
(21) Anmeldenummer: 14705023.1
(22) Anmeldetag: 24.01.2014
(51) Int. Cl.: H02K 5/22, H02K 11/01, H02K 11/40, H02K 11/33, H01R 13/02, H02K 11/22

(54) **ROTIERENDE ELEKTRISCHE MASCHINE**
ROTARY ELECTRIC MACHINE
MACHINE ÉLECTRIQUE TOURNANTE

(30) Priorität: 26.01.2013 DE 102013001314
(43) Veröffentlichungstag der Anmeldung: 02.12.2015
(73) Patentinhaber: Brose Fahrzeugteile GmbH & Co. Kommanditgesellschaft, Würzburg, 97076 Würzburg (DE)
(72) Erfinder: BERKOUK, Maurad, F-29217 Le Conquet (FR); LABAT, Sebastien, 97523 Schwanfeld (DE); FOURNIER, Eric, F-72700 Etival Lès Le Mans (FR)
(74) Vertreter: FDST Patentanwälte
(86) Internationale Anmeldenummer: PCT/EP2014/000189
(87) Internationale Veröffentlichungsnummer: WO 2014/114462

(56) Entgegenhaltungen:
- WO-A1-2010/108709
- WO-A2-01/37400
- WO-A2-2012/089406
- US-A- 4 642 885

## Beschreibung

Die Erfindung liegt auf dem Gebiet der Elektrotechnik und ist mit besonderem Vorteil bei rotierenden elektrischen Maschinen, insbesondere Elektromotoren und Generatoren, einsetzbar.

Rotierende elektrische Maschinen, insbesondere Elektromotoren, jedoch auch Generatoren werden in jüngerer Zeit häufig als sogenannte bürstenlose Maschinen ausgestaltet, wobei entsprechend eine direkte elektrische Kontaktierung eines Rotors durch Bürsten nicht notwendig ist. Der Rotor kann mit Permanentmagneten ausgestattet werden, die in einem rotierenden magnetischen Feld des Stators angetrieben werden. Der Stator weist hierzu Statorwicklungen auf, die entsprechend zur Erzeugung eines rotierenden magnetischen Feldes angesteuert werden. Häufig werden hierbei Ansteuerverfahren, beispielsweise mittels Pulsweitenmodulation (PWM), eingesetzt, wobei die Statorwicklung üblicherweise durch Halbleiterschaltungen mit Metalloxidfeldeffekttransistoren (MOSFETs), IGBTs oder Thyristoren realisiert werden können. Mittels der Pulsweitenmodulation können weitgehend frei wählbare Feldformen und entsprechend auch dynamisch rotierende Felder gestaltet werden.

Da insbesondere bei der Verwendung der Pulsweitenmodulation im kHz- bis MHz-Bereich elektrische Sprungsignale erzeugt werden, die beispielsweise eine sinusförmige Ansteuercharakteristik möglichst genau nachbilden sollen, ist mit der Abstrahlung von elektromagnetischen Wellen im Bereich der Wicklungen und der Zuleitungen zu rechnen.

Diese elektromagnetische Wirkung kann beispielsweise auf die Ansteuerschaltung, jedoch auch auf andere Aggregate und Verbraucher in der Nähe der rotierenden elektrischen Maschine wirken, was allgemein unerwünscht ist. Deshalb tritt die Forderung nach erhöhter elektromagnetischer Verträglichkeit bzw. einer möglichst geringen Sendeaktivität immer weiter in den Vordergrund. Entsprechend sind elektrische Maschinen gut zu entstören.

US 4,642,885 A offenbart einen Elektromotor mit einem Stator, mit einem Rotor, und mit einer Anschlusseinrichtung, sowie mit einem Koppelelement zur Kontaktierung eines Masseelementes.

WO 2010/108709 A1 zeigt eine Massekontaktierung eines Elektromotors mit einem Leiter, der einen mäanderförmigen Abschnitt aufweist. Einerseits sollen dadurch thermische Ausdehnungen sowie andererseits Vibrationen ausgeglichen werden, so dass diese beispielsweise nicht zum Lösen von elektrischen Kontakten führen.

Aus WO 2001/37400 A2 ist die Integration eines Masseverbinders in ein Koppelelement zur Herstellung der elektrischen Anschlüsse eines Motors bekannt.

WO 2012/089406 A2 offenbart einen Elektromotor mit federnden Leitern. Diese dienen gemäß dazu, eine Kontaktierung bei gleichzeitiger mechanischer Entkopplung zu ermöglichen. Thermische Ausdehnungen ebenso wie Schüttelbelastungen können auf diese Weise ausgeglichen werden.

Die vorliegende Erfindung stellt sich die Aufgabe, die Erzeugung störender elektromagnetischer Abstrahlungssignale durch wirksame Verbindung von Teilen einer elektrischen Maschine mit einem Massepotential zu minimieren. Dabei ist die Masseverbindung möglichst einfach, zuverlässig und montagefreundlich auszugestalten.

Diese Aufgabe wird erfindungsgemäß mit den Merkmalen gemäß Anspruch 1 gelöst. Der Anspruch 10 richtet sich auf eine rotierende elektrische Maschine der erfindungsgemäßen Art, während der unabhängige Anspruch 11 sich auf die Gestaltung einer Kontaktbrücke richtet.

Gemäß der Erfindung kommt es auf eine möglichst kurze und gut elektrisch leitende Masseverbindung an, um Ausgleichs- und Kreisringströme zu verhindern, und um auch möglicherweise entstehende Spannungsspitzen durch Überschläge möglichst weitgehend abzudämpfen und/oder auf Massepotential zu führen.

Gemäß dem Anspruch 1 ist bei einer rotierenden elektrischen Maschine, insbesondere einem Elektromotor, mit einem Stator und mit einem Rotor sowie mit einer elektronischen Ansteuereinrichtung und mit einer Anschlusseinrichtung, die wenigstens ein Koppelelement zur elektrischen Verbindung der Ansteuereinrichtung mit einer oder mehreren elektrischen Leitungen und ein zur Verbindung mit einem elektrischen Massepotential vorgesehenes Masseelement aufweist, vorgesehen, dass der Stator der elektrischen Maschine mit dem Masseelement mittels einer Kontaktbrücke verbunden ist, die einen ersten Befestigungsabschnitt und einen Befestigungsabschnitt sowie ein zwischen diesen angeordnetes, ein einstückiges Federblech aufweisendes Brückenelement aufweist, welches wenigstens teilweise mäanderförmig gestaltet ist.

In vielen Ausführungsformen weist der Stator einer rotierenden elektrischen Maschine einen sogenannten Eisenkern, beispielsweise aus laminierten Eisenblechen oder aus einem anderen hochpermeablen Material auf, der von Windungen einer Statorwicklung umgeben ist. Die Statorwicklung ist dabei mit einem Strom und einer Spannung beaufschlagt und die Statorwicklung ist von den übrigen Teilen des Stators elektrisch isoliert.

Um ein hohes Maß an elektromagnetischer Verträglichkeit sicherzustellen, ist es sinnvoll, möglichst viele Teile des Stators zuverlässig und über einen möglichst geringen elektrischen Widerstand mit einem Massepotential zu verbinden. Als Verbindungselement dient vorteilhaft die erfindungsgemäße Kontaktbrücke, die beispielsweise an einem Lagerschild eines elektrischen Motors einerseits und an einer Leiterplatte einer Ansteuereinrichtung oder einer metallischen Schirmplatte andererseits elektrisch andererseits angeschlossen werden kann. Zur mechanischen Befestigung der Kontaktbrücke dienen die Befestigungsabschnitte, wobei diese durchaus auch zusätzlich zur elektrischen Kontaktierung dienen können.

Durch die Verwendung eines Federblechs bei dem Brückenelement der Kontaktbrücke besteht zumindest in Richtung senkrecht zur Ebene des Federblechs die Möglichkeit, dieses in einfacher Weise zu biegen. Vorteilhaft wird ein Federblech verwendet, so dass eine elastische Biegung möglich ist. Um auch innerhalb der Ebene des Federblechs Flexibilität zu erreichen, ist die mäanderförmige Gestaltung des Blechs vorgesehen, die in einem gewissen Maß auch Biegungen bzw. Krümmungen des Federblechs in der Ebene des Blechs zulässt. Insgesamt stellt damit das mäanderförmige Blech einen in allen Richtungen flexibel bewegbaren Leiter dar.

Das Brückenelement/Federblech kann einstückig mit den Befestigungsabschnitten verbunden sein, so dass diese lediglich Endbereiche des Federblechs darstellen und mit dem mäanderförmig gestalteten Teil der Kontaktbrücke elektrisch in optimaler Form verbunden sind. Dennoch können die Befestigungsabschnitte bei entsprechender Gestaltung beispielsweise als quadratische oder rechteckige Blechstücke die erforderliche Stabilität zur Befestigung aufweisen.

Eine vorteilhafte Ausgestaltung der Erfindung sieht vor, dass das Federblech eine Anzahl von aneinander anschließenden gekrümmten Abschnitten mit jeweils wechselnder Krümmungsrichtung aufweist.

Die beschriebene geometrische Form entspricht einer Mäanderform mit geschwungenen Begrenzungslinien. Es ist jedoch auch eine Mäanderform mit rechtwinklig zueinander verlaufenden geraden Blechabschnitten denkbar.

Eine weitere vorteilhafte Ausgestaltung der Erfindung sieht vor, dass das Brückenelement aus jeweils S-förmigen Elementen und/oder gespiegelt S-förmigen Elementen besteht.

Eine weitere vorteilhafte Ausgestaltung der Erfindung sieht vor, dass das Brückenelement sich im Wesentlichen als ebenes Federblech in einer ersten Fläche entlang einer Längsrichtung erstreckt, die durch die Verbindungslinie zwischen dem ersten und dem zweiten Befestigungsabschnitt definiert ist. Abschnitte des Federbleches, die im Wesentlichen in Längsrichtung oder parallel zur Längsrichtung verlaufen, sind hierbei gegenüber den übrigen Abschnitten des Federblechs aus der ersten Fläche heraus um 90° abgewinkelt.

Dabei können vorteilhaft die Biegekanten parallel zur Längsrichtung verlaufen. Die um 90° abgewinkelten Bereiche des Federblechs erhöhen die Flexibilität bei Biegungen innerhalb oder parallel zu der ersten Fläche des Federbleches.

Die Erfindung kann außerdem vorteilhaft dadurch gestaltet werden, dass der erste und/oder der zweite Befestigungsabschnitt eine durchgehende Klemmöffnung, insbesondere auch einen durchgehenden Klemmschlitz aufweist. In der Klemmöffnung ist geeigneterweise ein Klemmdorn einklemmbar. Damit kann die Kontaktbrücke besonders einfach auf entsprechend vorgesehenen Klemmdornen innerhalb der elektrischen Maschine befestigt werden.

Zur Verbesserung der Befestigung der Kontaktbrücke kann weiter vorteilhaft vorgesehen sein, dass wenigstens ein Befestigungsabschnitt wenigstens einen zu der durchgehenden Klemmöffnung hin offenen Trennschlitz aufweist derart, dass durch den Trennschlitz/mehrere Trennschlitze wenigstens ein Randbereich der Klemmöffnung senkrecht zur Ebene des jeweiligen Befestigungsabschnitts ausbiegbar ist. Damit ist gewährleistet, dass ein Klemmdorn mit einem gewissen Übermaß in der jeweiligen Klemmöffnung einklemmbar ist, wobei die Ränder der Klemmöffnung sich elastisch verformen können und eine kraftschlüssige, insbesondere selbstverriegelnde Verbindung zwischen der jeweiligen Klemmöffnung und dem Klemmdorn gebildet ist.

Weiter kann die Erfindung vorteilhaft dadurch ausgestaltet werden, dass die durchgehende Klemmöffnung ein gerader Klemmschlitz ist, dass an beiden Enden des Klemmschlitzes jeweils ein mit dem Klemmschlitz verbundener, insbesondere quer zu diesem verlaufender Trennschlitz vorgesehen ist, und dass zwischen den Trennschlitzen jeweils wenigstens ein biegbarer Randstreifen gebildet ist.

Derart zwischen zwei Trennschlitzen gebildete Randstreifen sind besonders einfach ausbiegbar, so dass auch Klemmdorne mit größerem Übermaß in den Klemmöffnungen aufgenommen und Toleranzen leicht ausgeglichen werden können. Bei entsprechender Gestaltung der Randstreifen findet eine kraftschlüssige Verriegelung des jeweiligen Klemmdorns in der Klemmöffnung statt. Klemmdorne können zur besseren Einführung in die jeweilige Klemmöffnung jeweils an ihrem freien Ende verjüngt, d.h. spitz, insbesondere konisch zulaufend ausgebildet sein, um den Befestigungsvorgang/Montagevorgang zu erleichtern.

Die Kontaktbrücke weist einen federnden Kontaktarm zur Bildung eines elektrischen Druckkontaktes mit einem Gegenkontakt auf. Beispielsweise kann ein erster Befestigungsabschnitt zur mechanischen Befestigung und zur elektrischen Kontaktierung der Kontaktbrücke an ihrem einen Ende dienen, während der zweite Befestigungsabschnitt lediglich zur mechanischen Befestigung dient und der Kontakt am zweiten Ende der Kontaktbrücke durch den federnden Kontaktarm hergestellt wird, der beispielsweise mit einem Befestigungsabschnitt verbunden ist. Es ist jedoch auch denkbar, dass beide Befestigungsabschnitte sowohl mechanische Verbindungen als auch elektrische Verbindungen herstellen, und dass der federnde Kontaktarm zur Herstellung einer zusätzlichen Druckkontaktverbindung dient.

Der federnde Kontaktarm kann beispielsweise eine Fortsetzung des Federbleches von dem Brückenelement aus über einen der Befestigungsabschnitte hinaus darstellen. Vorteilhaft kann der federnde Kontaktarm beispielsweise an seinem freien Ende eine spitz zulaufende Kontaktspitze aufweisen, um die Herstellung eines Druckkontaktes an einem Gegenkontakt auch durch eine Isolierschicht hindurch zu erleichtern.

Besonders vorteilhaft kann vorgesehen sein, dass der federnde Kontaktarm an einem Gegenkontakt an einer Leiterplatte der Ansteuereinrichtung und/oder einer zwischen der Ansteuereinrichtung und dem Stator angeordneten Metallplatte anliegt. Ein Befestigungsabschnitt der Kontaktbrücke kann dann beispielsweise mit einem Lagerschild mechanisch und elektrisch verbunden sein und somit den Massekontakt zwischen dem Lagerschild und übrigen Teilen des Stators einerseits und einen Massekontakt einer Leiterplatte der Ansteuereinrichtung oder der leitenden Schirmplatte andererseits herstellen.

Vorteilhafterweise liegen zumindest Teile von Stator und Rotor des Motors auf Massepotential. Zweckmäßigerweise ist die rotierende elektrische Maschine bürstenlos. Mit anderen Worten ist der Stator nicht mittels Bürsten oder dergleichen mit dem Rotor elektrisch kontaktiert. Auf diese Weise ist eine elektromagnetische Störung weiter verringert. Insbesondere erfolgt der elektrische Kontakt zwischen dem Rotor und dem Stator, wenn Stator und Rotor zumindest teilweise auf Massepotential liegen, nicht mittels der Bürsten. Folglich ist erfolgt die hierfür erforderliche Kontaktierung über das Lager zwischen dem Rotor und dem Stator.

Die Erfindung bezieht sich außer auf eine rotierende elektrische Maschine der oben beschriebenen Art auch auf eine Kontaktbrücke mit einem ersten und einem zweiten Befestigungsschnitt und einem zwischen diesen angeordneten, mäanderförmig gestalteten Federblech zur Herstellung einer elektrisch leitenden Verbindung. Diese Kontaktbrücke kann wahlweise eines oder mehrere der oben im Zusammenhang mit der Verwendung bei der elektrischen Maschine beschriebenen Merkmale für sich aufweisen.

Nachfolgend werden Ausführungsbeispiele der Erfindung anhand einer Zeichnung näher erläutert. Darin zeigen:
- Fig. 1: einen Längsschnitt durch einen schematisch dargestellten Elektromotor, auf der linken Seite der Darstellung mit Außenrotor, auf der rechten Seite der Darstellung mit Innenrotor dargestellt,
- Fig. 2: eine Blechzunge mit einer Führungsschiene zur Verbindung einer Schirmplatte mit einem Masseelement,
- Fig. 3: eine dreidimensionale Ansicht einer Ansteuereinrichtung sowie eines Motorgehäuses,
- Fig. 4: eine dreidimensionale Ansicht einer Ansteuereinrichtung mit einem Elektromotor bei teilweise weggelassenem Gehäuse,
- Fig. 5: eine Ansicht einer Ansteuereinrichtung für einen Elektromotor von der Bestückungsseite der Leiterplatte aus gesehen,
- Fig. 6: eine Blechzunge mit einer Führungsschiene in dreidimensionaler Darstellung,
- Fig. 7 u. 8: weitere Darstellungen einer Blechzunge gemäß Fig. 6 aus anderen Ansichtsrichtungen,
- Fig. 9: eine Blechzunge wie in den Figuren 6 bis 8 dargestellt, ohne Führungsschiene,
- Fig. 10: eine andere Ausführungsform einer Blechzunge mit einer Führungsschiene,
- Fig. 11: eine Blechzunge wie in Fig. 10 dargestellt, ohne Führungsschiene,
- Fig. 12: eine Blechzunge wie in Fig. 11 dargestellt, in anderer Ansicht,
- Fig. 13: eine Blechzunge in einer Führungsschiene wie in Fig. 10 dargestellt, in anderer Ansicht,
- Fig. 14: eine Führungsschiene für eine Blechzunge entsprechend den Figuren 10 bis 13,
- Fig. 15: ein Brückenelement zur Verbindung eines Stators einer elektrischen Maschine mit einem Masseelement,
- Fig. 16: das Brückenelement aus Fig. 15 in anderer Ansicht sowie
- Fig. 17: in dreidimensionaler Ansicht eine Darstellung eines mäanderförmigen Federbleches.

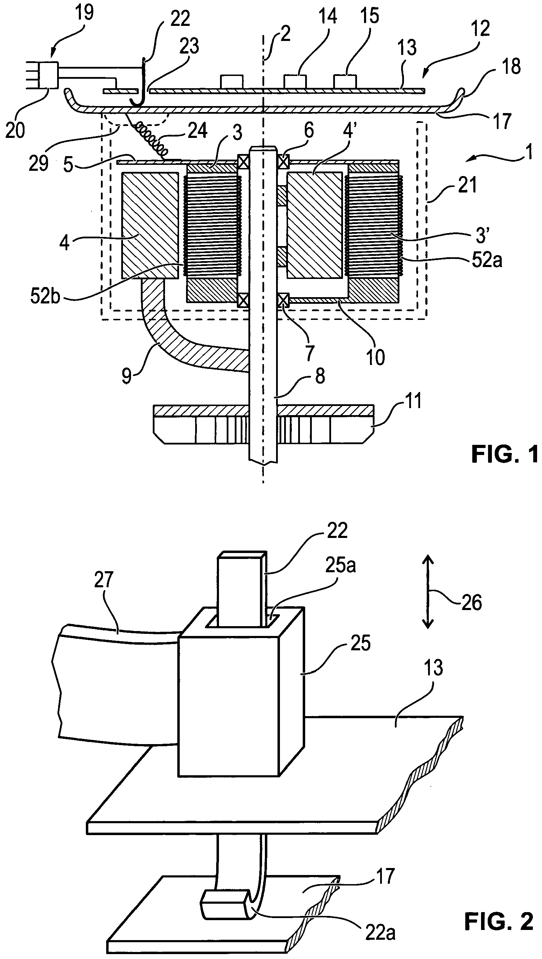

Fig. 1 zeigt im Überblick in einem Längsschnitt eine elektrische Maschine am Beispiel eines bürstenlosen Elektromotors 1.

Auf der linken und der rechten Seite der Mittellinie 2 sind unterschiedliche Konfigurationen dargestellt. Auf der linken Seite ist in einem Halbschnitt ein bürstenloser elektrischer Motor mit einem innenliegenden Stator 3 und einem Außenrotor 4 dargestellt. Der innenliegende Stator ist mit einem stirnseitigen Lagerschild 5 verbunden. Gegenüber dem Lagerschild ist mittels eines ersten Lagers 6 und eines zweiten Lagers 7 die jeweils im linken und rechten Halbschnitt gleich ausgebildet sein können, eine Welle 8 drehbar gelagert.

Bei der im linken Halbschnitt dargestellten Maschine ist der Außenrotor 4 mittels Stegen oder einer glockenartigen Einrichtung 9 mit der Welle 8 verbunden und durch diese getragen. Zudem kann der Außenrotor 4 noch am Lagerschild 5 mittels eines nicht dargestellten Wälzlagers gelagert sein.

Auf der rechten Seite des Schnittes der Fig. 1 ist ein Elektromotor mit einem Innenläufer dargestellt, so dass der Rotor 4' radial innerhalb des Stators 3' liegt. Der Stator 3' ist mit dem Lagerschild 5 fest verbunden ebenso wie beispielsweise mit einem weiteren Lagerschild 10.

Der Stator 3, 3' ist jeweils mit einer Wicklung 52a, 52b versehen, die einen oder mehrere Kerne umgibt und in nicht näher dargestellter Weise über Ansteuerleitungen mit einer Ansteuereinrichtung 12 verbunden ist

An den Lagerschilden 5, 10 ist mittels der Lager 6, 7 die Welle 8 drehbar gelagert. Mit der Welle 8 ist zudem der innen liegende Rotor 4' fest verbunden.

Beide Konstruktionen sind in der Technik an sich bekannt und hier nur der Vollständigkeit halber beide dargestellt, da bei beiden Ausführungsformen die Erfindung anwendbar ist.

In der Verlängerung der Welle 8 nach unten ist als Funktionselement, das von der Welle anzutreiben ist, das Flügelrad 11 eines Lüfters/Ventilators angedeutet.

In der Fig. 1 oberhalb von Stator und Rotor ist die Ansteuereinrichtung 12 gezeigt, die eine Leiterplatte 13 und darauf angeordnete elektronische Bauelemente 14, 15 aufweist. Zwischen der Ansteuereinrichtung 12, genauer der Leiterplatte 13, und dem Lagerschild 5 des Motors ist eine Schirmplatte 17 angeordnet, die wenigstens teilweise aus Metall besteht oder metallisiert ist und die einen aufwärts zur Leiterplatte hin umgebördelten Rand 18 aufweist. Die Schirmplatte 17 kann zudem als Wärmesenke für die Ansteuereinrichtung 12 dienen und mit der Leiterplatte 13 fest verbunden sein.

Die Ansteuereinrichtung 12 ist mit einer Anschlusseinrichtung 19 verbunden, die unter anderem ein Koppelelement zur elektrischen Verbindung mit Leitungen in Form eines Teils eines Steckverbinders 20 aufweist. Zudem ist das Gehäuse des Steckverbinders 20 in dem gezeigten Beispiel mit Massepotential verbunden und kann ein Masseelement bilden.

In der Fig. 1 ist zudem durch die gestrichelte Doppelkontur 21 die Ausformung und Wirkung einer elektrischen Abschirmung des Motors dargestellt. Die Doppelkontur 21 bildet eine glockenartige Abdeckung, die auf ihrer offenen Seite zusätzlich durch die Schirmplatte 17 abgeschlossen ist, so dass die elektromagnetisch strahlenden Teile von Stator und Rotor nach außen hin keine oder möglichst wenig elektromagnetische Strahlung abgeben.

Außerdem ist durch die Schirmplatte 17 speziell auch die Ansteuereinrichtung 12 besonders gut gegenüber der Wicklung des Motors abgeschirmt.

Die Doppelkontur 21 kann beispielsweise als Gesamtkontur durch die geerdeten Teile von Stator und Rotor des Motors gebildet sein, sie kann jedoch auch in einem zusätzlichen metallisierten Bauteil bestehen, das diese genannten Bauteile des Motors umgibt. Es kann sich dabei beispielsweise auch um ein Motorgehäuse handeln.

Grundsätzlich muss die Doppelkontur 21 jedoch nicht notwendigerweise ein konkretes Bauteil bezeichnen, sondern kann lediglich die durch die vorliegende Erfindung gewährleistete elektromagnetische Schirmfunktion symbolisieren.

Um die hierfür vorgesehenen Teile von Stator und Rotor des Motors sowie die Schirmplatte 17 effektiv mit dem Massepotential zu verbinden, sind gemäß der vorliegenden Erfindung verschiedene Maßnahmen vorgesehen.

Einerseits soll mit möglichst geringem elektrischen Widerstand und auf möglichst kurzem Weg die Schirmplatte 17 mit einem auf Massepotential liegenden Masseelement der Anschlusseinrichtung verbunden werden. Hierzu ist eine in der Fig. 1 nur schematisch angedeutete Blechzunge 22 vorgesehen, die mit der Anschlusseinrichtung auf kurzem Wege verbunden ist und die ihrerseits mit der Schirmplatte 17 einen elektrischen Druckkontakt herstellt. Die Blechzunge 22 durchsetzt dabei die Ebene der Leiterplatte 13. Hierzu weist die Leiterplatte 13 eine durchgehende Öffnung 23 auf.

Die Führung der Blechzunge wird konkreter weiter unten anhand von Ausführungsbeispielen im Einzelnen dargestellt.

Um die Abschirmfunktion der auf Massepotential liegenden Teile von Stator und Rotor des Motors zu realisieren, ist eine möglichst zuverlässige und kurze Verbindung des Lagerschilds 5 mit der Schirmplatte 17 vorgesehen. Diese Verbindung weist eine Kontaktbrücke 24 auf, die einerseits elektrisch leitend zuverlässig und effektiv mit der Schirmplatte 17 einerseits und dem Lagerschild 5 andererseits kontaktiert ist und die andererseits genügend Flexibilität aufweist, um Fertigungstoleranzen bei der Montage des Motors einerseits sowie Bewegungen im Betrieb zwischen der Schirmplatte 17 beziehungsweise der Ansteuereinrichtung 12 und Stator und Rotor des Motors andererseits auszugleichen.

Die Gestaltung der Kontaktbrücke 24 wird ebenfalls weiter unten anhand von konkreten Ausführungsbeispielen genauer erläutert.

Fig. 2 zeigt in einer dreidimensionalen Ansicht die Leiterplatte 13 sowie die diese durchsetzende Blechzunge 22, die unterhalb der Leiterplatte 13 die Schirmplatte 17 mittels eines Druckkontaktes kontaktiert. Die Leiterplatte 13 und die Schirmplatte 17 sind dabei nur ausschnittsweise dargestellt.

Die Blechzunge 22 ist als flacher, elastisch biegsamer Blechkörper dargestellt, der an seinem der Schirmplatte 17 zugewandten Ende ein bogenförmig gestaltetes Druckkontaktstück 22a aufweist. Dieses ist elastisch verformbar, so dass mittels des Druckkontaktstücks 22a durch den Ausgleich von Toleranzen ein dauerhafter und sicherer Druckkontakt zur Schirmplatte 17 mit einer elastischen Anpresskraft durch elastische Verformung der Blechzunge hergestellt werden kann.

Die Blechzunge 22 ist vorteilhaft in einer Klemmeinrichtung 25 einerseits mechanisch gehalten und andererseits elektrisch kontaktiert. Die Klemmeinrichtung 25 besteht deshalb vorteilhaft wenigstens teilweise aus einem gut leitenden Metall.

Innerhalb der Klemmeinrichtung 25 ist die Blechzunge entweder kraftschlüssig, d.h. durch Reibung oder mittels einer Verrastung gehalten und insbesondere in Richtung senkrecht zur Oberfläche der Leiterplatte 13, wie durch den Doppelpfeil 26 angedeutet, fixiert.

Die Klemmeinrichtung 25 ist mittels einer Anschlussfahne 27 mit einem Masseelement der Anschlusseinrichtung 19 verbunden. Beispielsweise kann die Kontaktfahne als steifes Metallblech ausgebildet sein, das mit der Klemmeinrichtung 25 einstückig oder durch eine Kleb-, Löt- oder Schweißverbindung verbunden ist und das in einer in der Fig. 2 nicht näher dargestellten Weise steif mit dem auf Massepotential liegenden Gehäuse des Kopplungselementes 20, d.h. beispielsweise einer Steckerbuchse verbunden ist.

Die Klemmeinrichtung 25 kann auf der Leiterplatte fixiert sein, sie kann jedoch auch gegenüber dieser beweglich und mit dieser nicht verbunden und durch die Kontaktfahne 27 ausschließlich gehalten sein.

In dem in der Klemmeinrichtung 25 gebildeten Führungskanal 25a für die Blechzunge 22, der eine Führungsschiene für die Blechzunge 22 darstellt, kann die Blechzunge durch ein beigefügtes metallisches oder Kunststoff-Teil in lateraler Richtung senkrecht zur Richtung des Doppelpfeils 26 kraftschlüssig festgeklemmt sein. Die Blechzunge 22 kann auch einen gebogenen Abschnitt aufweisen, der innerhalb des Führungskanals 25a einklemmbar ist. Außerdem ist es auch möglich, innerhalb des Führungskanals 25a eine Verrastung zwischen der Blechzunge 22 und einem metallischen oder Kunststoff-Teil der Klemmeinrichtung 25 vorzusehen.

Dabei kann beispielsweise auch ein Kunststoff-Teil der Rastvorrichtung mit der Leiterplatte 13 oder mit Teilen der Klemmeinrichtung fest verbunden sein.

Im Zusammenhang mit der Durchführung der Blechzunge 22 durch die Öffnung der Leiterplatte 13 kann auch in der Ebene der Leiterplatte 13 ein dort vorgesehener Masseleiter in Form einer Leiterbahn mit der Blechzunge 22 kontaktiert sein. Einerseits kann auf diese Weise eine Leiterbahn der Leiterplatte mittels der Blechzunge 22 mit dem Masseelement verbunden sein, es kann jedoch auch vorgesehen sein, dass das Masseelement anderweitig auf kurzem Wege mit der Leiterbahn der Leiterplatte verbunden ist und die Blechzunge 22 ausschließlich über die Leiterbahn der Leiterplatte 13 mit dem Masseelement verbunden ist. In diesem Fall dient die Blechzunge 22 zur Herstellung einer leitenden Verbindung zwischen der auf Massepotential liegenden Leiterbahn der Leiterplatte 13 und der Schirmplatte 17.

Wenn die Klemmeinrichtung 25 fest mit der Leiterplatte 13 verbunden ist, kann die Kontaktfahne 27 auch durch einen flexiblen Leiter realisiert sein.

Die Öffnung 23 in der Leiterplatte, durch die hindurch sich die Blechzunge 22 erstreckt, kann auch beispielsweise am Rand der Leiterplatte 13 liegen und zum Rand hin offen sein, also lediglich eine seitliche Ausnehmung der Leiterplatte 13 darstellen.

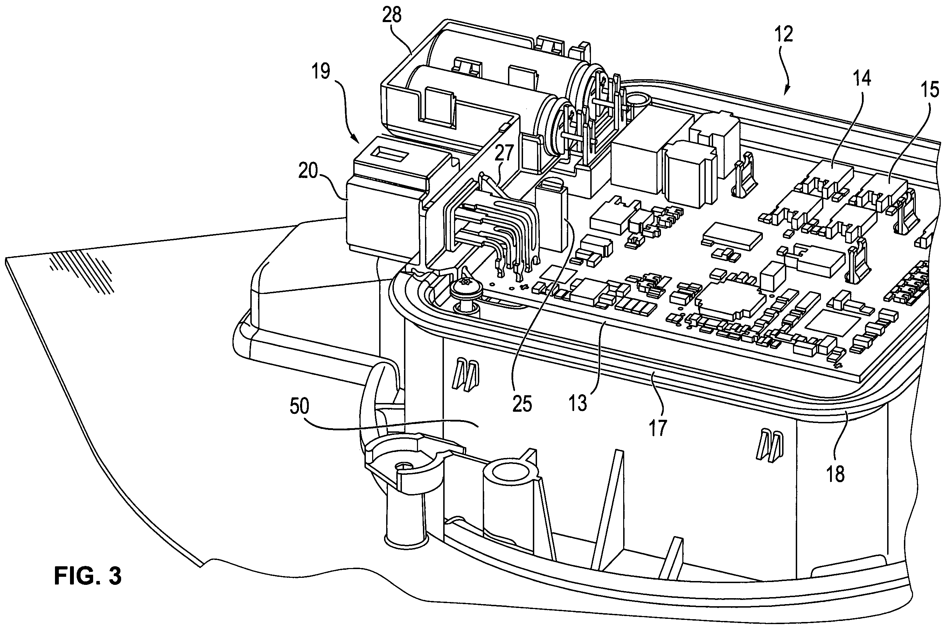

Die Fig. 3 zeigt in einer dreidimensionalen Ansicht einen Elektromotor mit einem Gehäuse 50 sowie einer Ansteuereinrichtung 12 mit einer Leiterplatte 13 und einer in der Figur unterhalb der Leiterplatte 13 angeordneten Schirmplatte 17 mit umgebördeltem Rand 18. Die Schirmplatte 17 kann beispielsweise mit der Leiterplatte 13 in engem Kontakt stehen, so dass die Schirmplatte 17 gleichzeitig als Wärmesenke für die elektronischen Bauteile der Leiterplatte 13 dienen kann. Es können Wärmebrücken zwischen der Leiterplatte 13 und der Schirmplatte 17 vorgesehen sein und die beiden Elemente können auch miteinander direkt verklebt sein.

Die Schirmplatte 17 ist mit dem Gehäuse 50 in nicht weiter dargestellter Weise verbunden. Es sind in der Figur auf der Oberseite der Leiterplatte 13 verschiedene elektronische Bauelemente 14, 15 sichtbar, unter denen beispielsweise Thyristoren, IGBTs oder ähnliche Halbleiterbauelemente sind, die es erlauben, die Wicklung des Motors mittels pulsweitenmodulierter Signale hochfrequent anzusteuern.

In der Fig. 3 ist ebenfalls eine Anschlusseinrichtung 19 erkennbar mit einem Koppelelement 20 in Form eines Teils einer Steckerverbindung, wobei das Koppelelement 20 als Steckergehäuse mit in seinem Inneren liegenden Kontaktpins ausgebildet ist. Das Steckergehäuse 20 ist beispielsweise direkt mit dem Massepotential verbunden oder es enthält einen Kontaktpin, der seinerseits mit dem Massepotential verbunden wird.

In der Fig. 3 ist auf der der bestückten Seite der Leiterplatte 13 der Anschlusseinrichtung 19 eine Kontaktfahne 27 dargestellt, die als ein mit einem Rahmen 28 der Anschlusseinrichtung 19 fest verbundenes, beispielsweise verschweißtes Blech ausgeführt ist. Der Rahmen 28 der Anschlusseinrichtung kann in diesem Fall ein Masseelement bilden.

Zudem ist in der Fig. 3 die Klemmeinrichtung 25 erkennbar, aus der oben eine Blechzunge herausragt.

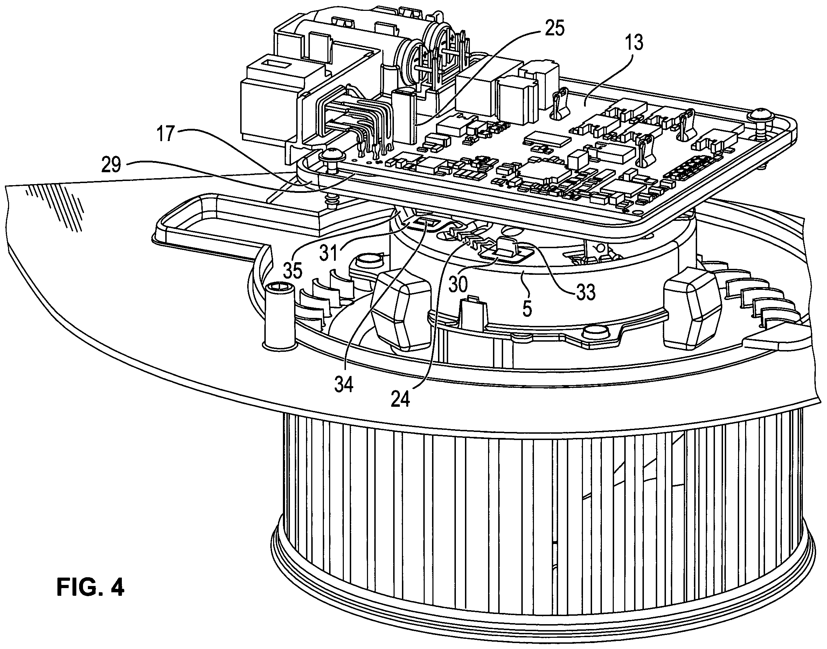

Die Fig. 4 zeigt aus einem etwas veränderten Blickwinkel die Konstruktion der Fig. 3, wobei darauf hingewiesen werden soll, dass die Schirmplatte 17 im Bereich der Ausnehmung in der Leiterplatte 13, durch die die Blechzunge im Bereich der Klemmeinrichtung 25 hindurch ragt, eine Vertiefung 29 aufweist, so dass in diesem Bereich der Abstand zwischen der Schirmplatte 17 und der Leiterplatte 13 vergrößert und Platz für eine Druckkontaktvorrichtung bzw. für ein Druckkontaktstück 22a der Blechzunge 22 gebildet ist.

Die Vertiefung ist in der Fig. 1 durch eine gestrichelte Linie im Bereich der Blechzunge unterhalb der Schirmplatte 17 in einem Schnitt dargestellt.

Unterhalb der Schirmplatte 17 ist in der Fig. 4 auch die Verbindung der Schirmplatte mit einem Lagerschild 5 des Motors in Form der Kontaktbrücke 24 dargestellt.

Die Kontaktbrücke weist einen ersten Befestigungsabschnitt 30 sowie einen zweiten Befestigungsabschnitt 31 und zwischen diesen ein Brückenelement 32 auf. Dieses wird weiter unten detailliert erläutert.

Die Befestigungsabschnitte 30, 31 der Kontaktbrücke 24 sind auf Kontaktdorne 33, 34 aufgesteckt, die entweder nur der Befestigung oder der Befestigung und der elektrischen Kontaktierung der Kontaktbrücke dienen. In der Fig. 4 ist zudem zu erkennen, dass die Kontaktbrücke 24 auf der dem ersten Befestigungsabschnitt 30 abgewandten Seite des zweiten Befestigungsabschnittes 31 einen federnden Kontaktarm 35 aufweist, der in Richtung zur Unterseite der Schirmplatte 17 hin ausgerichtet ist und diese kontaktiert.

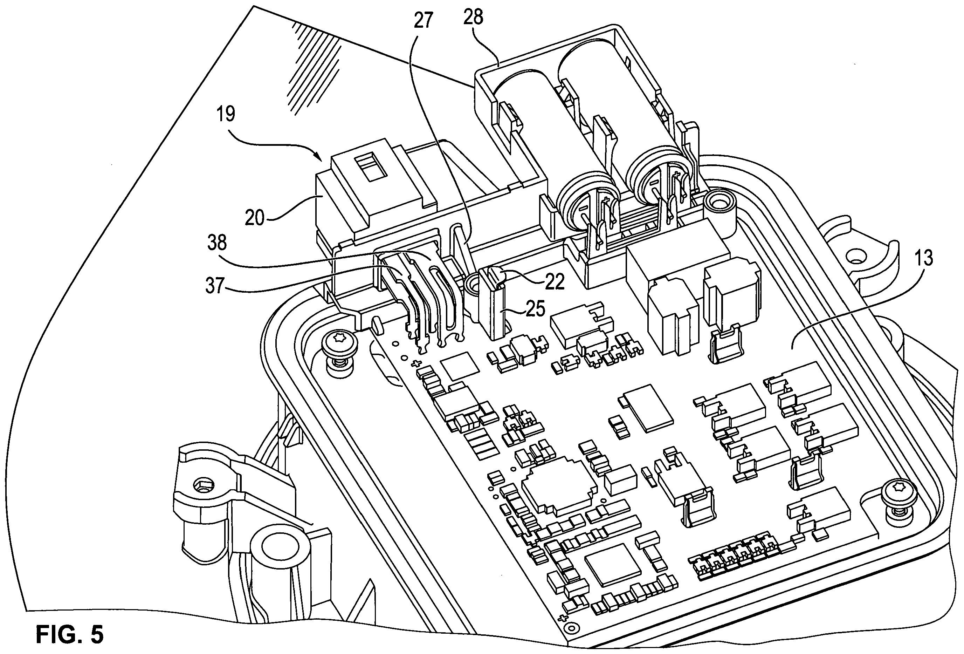

Die Fig. 5 zeigt in einer weiteren dreidimensionalen Ansicht die Oberseite des bereits in den Fig. 3 und 4 dargestellten Elektromotors, wobei besonders gut die Klemmeinrichtung 25 mit der Blechzunge 22 und der Kontaktfahne 27 zu erkennen ist. Zwischen der Kontaktfahne 27 und der Klemmeinrichtung 25 ist ein hohlzylindrisches metallisches Kontaktelement 36 eingefügt, das die Kontaktfahne 27 mit der Klemmeinrichtung 25 verbindet. Zudem ist erkennbar, dass die Kontaktpins des Koppelelementes 20 auf der Seite der Leiterplatte 13 über Anschlussleiter 37, 38 jeweils mit Leiterbahnen der Leiterplatte 13 verbunden sind. Jedoch ist bei dieser Ausgestaltung kein auf Massepotential liegender Anschlussleiter der Anschlusseinrichtung 19 direkt mit einer Leiterbahn der Leiterplatte 13 verbunden, so dass die mit dem Massepotential zu verbindenden Teile der Ansteuereinrichtung ausschließlich über die Kontaktfahne 27 bzw. die Blechzunge 22 mit dem Masseelement/Rahmen 28 verbunden sind.

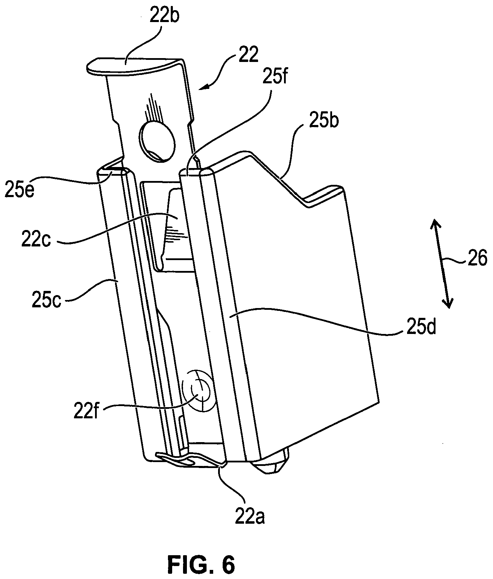

Die Fig. 6 bis 9, die in der Folge erläutert werden, zeigen verschiedene Ansichten verschiedener, leicht variierter Klemmeinrichtungen die im Rahmen der Erfindung eingesetzt werden können.

Fig. 6 zeigt in diesem Zusammenhang eine Führungsschiene 25b die zwei Seitenwangen 25c und 25d aufweist, zwischen denen die Blechzunge 22 in Richtung des Doppelpfeils 26 verschiebbar ist. Die Seitenwangen 25c, 25d weisen jeweils Abschlusswinkel 25e, 25f auf, die die Stirnseite der Blechzunge 22 teilweise abdecken und eine Führungsfläche für die Blechzunge 22 bilden.

Die Blechzunge 22 weist an ihrem oberen Ende ein Flachstück 22b auf, das hier als rechtwinklig abgewinkeltes Ende der Blechzunge ausgeführt ist und das beispielsweise der Manipulation der Blechzunge 22, d.h. konkret dem Einschieben in die Klemmeinrichtung 25 dienen kann.

Am unteren, dem Flachstück entgegengesetzten Ende der Blechzunge 22 ist das Druckkontaktstück 22a in Form eines ebenfalls umgebogenen Endes mit einer eingeprägten Sicke 22f erkennbar.

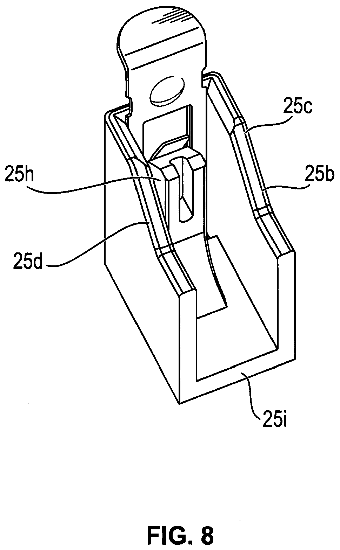

In ihrem Verlauf weist die Blechzunge eine Rastnase 22c auf, die als freigestanztes Blechzungenteil ausgebildet ist, das in der Darstellung der Fig. 6 in die Zeichenebene hinein ausgebogen ist. Beim Einschieben der Blechzunge 22 in die Klemmeinrichtung 25 kann diese Rastnase 22c, die eine freigestanzte Blechlasche sein kann, hinter einem Vorsprung eines Teils der Klemmeinrichtung 25 verrasten, wodurch die Blechzunge 22 vor einem Herausschieben aus der Klemmeinrichtung 25 bewahrt ist. Dies wird weiter unten im Zusammenhang mit der Fig. 8 näher erläutert.

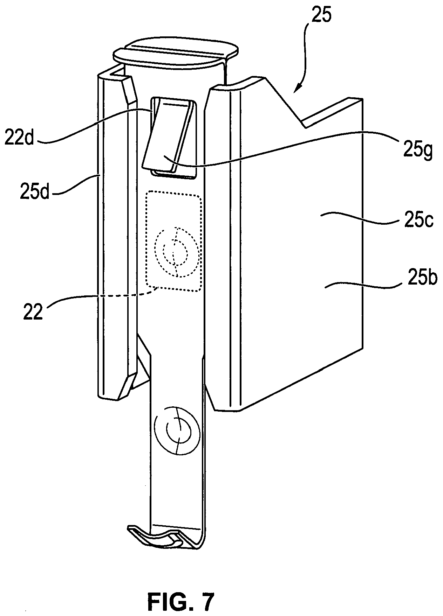

In der Fig. 7 ist eine Anordnung gezeigt, bei der die Blechzunge 22 eine Rastöffnung 22b aufweist, die beim Einschieben der Blechzunge in die Klemmeinrichtung 25 mit einer vorragenden Nase 25g der Klemmeinrichtung zur Verrastung zusammenwirkt.

Die Nase 25g kann beispielsweise ein Teil eines in der Fig. 7 nicht erkennbaren Bauteils sein, das zwischen den beiden Wangen 25c, 25d fixiert ist und das beispielsweise aus Metall oder Kunststoff bestehen kann.

Die Fig. 8 zeigt von der offenen Seite der Klemmeinrichtung 25b her den Zwischenraum zwischen den Seitenwangen 25c und 25d, wo das Bauteil 25h angeordnet ist, welches eine Rastnase aufweist und aus einem Metall oder Kunststoff bestehen kann. Das Bauteil 25h kann beispielsweise auf dem Boden 25i der Klemmeinrichtung 25, der zwischen den Seitenwangen 25c und 25 d verläuft, befestigt sein. Es ist ein freigestanztes Blechlaschenteil der Blechzunge dargestellt, dass mit der Rastnase verrasten kann.

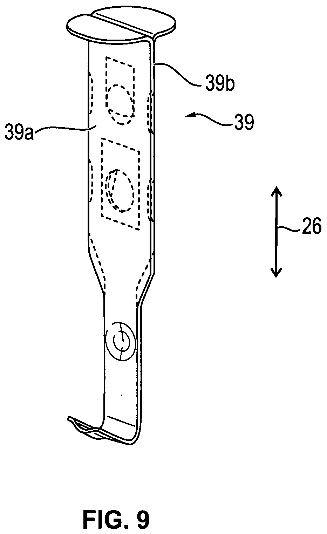

Die Figur 9 zeigt eine Blechzunge 39, die einen vorderen Blechstreifen 39a und einen mit diesem teilweise deckungsgleichen hinteren Blechstreifen 39b aufweist, die aneinander anliegen und gegeneinander in ihrer Längsrichtung (Doppelpfeil 26) verschiebbar sind. Durch die Verschiebung der Blechsteifen gegeneinander kann beispielsweise eine Blechlasche in einem der Blechstreifen, die als Rastnase wirkt, zur Entriegelung von einer Rastnase der Klemmeinrichtung verformt werden. Dazu weist beispielsweise der hintere Blechstreifen 39b eine Öffnung auf, die von einer Blechlasche des vorderen Blechstreifens zur Verrastung an einer Rastnase durchsetzt werden kann. Durch Verschiebung des hinteren Blechstreifens gegenüber dem vorderen Blechstreifen wird die Öffnung im hinteren Blechstreifen gegenüber der Blechlasche des vorderen Blechstreifens verschoben und zurückgebogen.

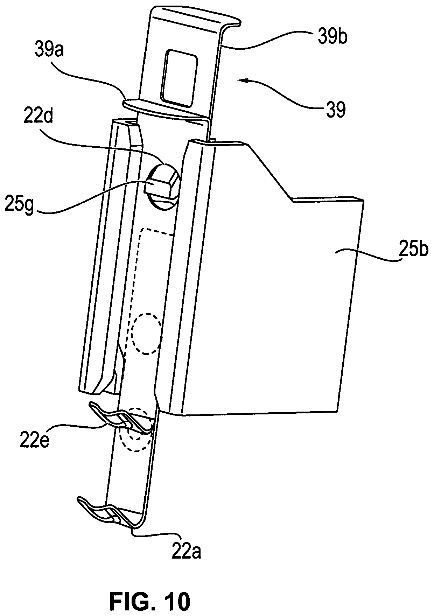

Die Figur 10 zeigt eine Klemmeinrichtung 25 mit einer Führungsschiene 25b sowie einer Blechzunge 39, die wie anhand der Figur 9 beschrieben aufgebaut ist. Der vordere und hintere Blechstreifen 39a, 39b sind derart zueinander verschoben, dass eine Verrastung mit der Rastnase 25g der Klemmeinrichtung stattfinden kann. Diese ragt durch eine Öffnung 22d in der Blechzunge.

Es ist zudem dargestellt, dass ein Druckkontaktstück 22a nach unten durch die nicht dargestellte Öffnung in der Leiterplatte hindurch und bis auf die Schirmplatte ragt. Es ist ein zweites Druckkontaktstück 22e dargestellt, das der Kontaktierung der Blechzunge 39 mit der Leiterplatte 13 bzw. einer dort vorgesehenen Leiterbahn mittels einer in dem Kontaktstück 22e vorgesehen Sicke dient. Die beiden Druckkontaktstücke 22a, 22e können an jeweils verschiedenen Blechstreifen/- Teilen 39a/39b der Blechzunge 39 oder gemeinsam an demselben Blechstreifen/Teilen vorgesehen sein.

Durch Verschieben des Teils 39b der Blechzunge 39 gegenüber dem Teil 39a kann die Verrastung der Nase 25g in der Rastöffnung 22d aufgehoben werden.

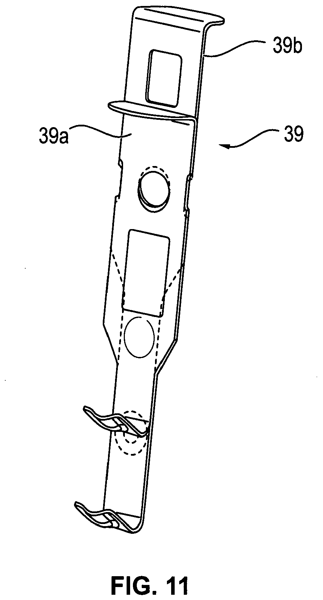

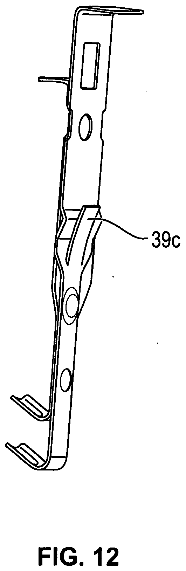

Die Fig. 11 zeigt die Blechzunge 39 mit dem vorderen Blechstreifen 39a und dem hinteren Blechstreifen 39b in voller Ansicht von einer ersten Seite, während die Fig. 12 dieselbe Konstellation aus der Fig. 11 von der entgegengesetzten Seite mit der Rastnase 39c darstellt.

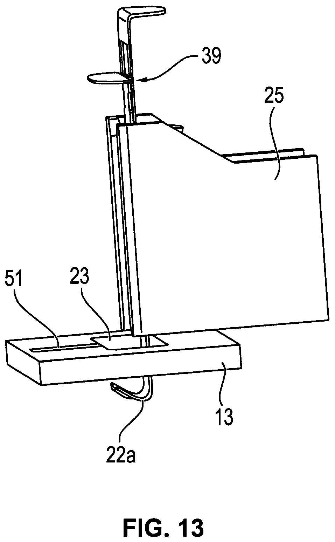

Die Fig. 13 zeigt die Klemmeinrichtung 25 mit der Blechzunge 39 die durch die Öffnung 23 in der Leiterplatte 13 hindurch ragt sowie das unterhalb der Leiterplatte 13 mit der Schirmplatte 17 zu kontaktierende Druckkontaktstück 22a.

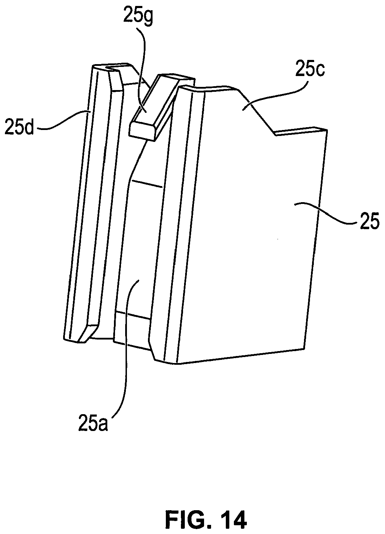

In der Fig. 14 ist die Klemmeinrichtung 25 dargestellt mit den beiden Seitenwangen 25c, 25d und einem zwischen diesen vorgesehenen Bauteil 25h, das die Nase 25g trägt. Die Nase 25g kann beispielsweise elastisch verformbar und durch eine Druckkraft aus der Bewegungsbahn der Blechzunge in der Klemmeinrichtung 25 entfernbar sein.

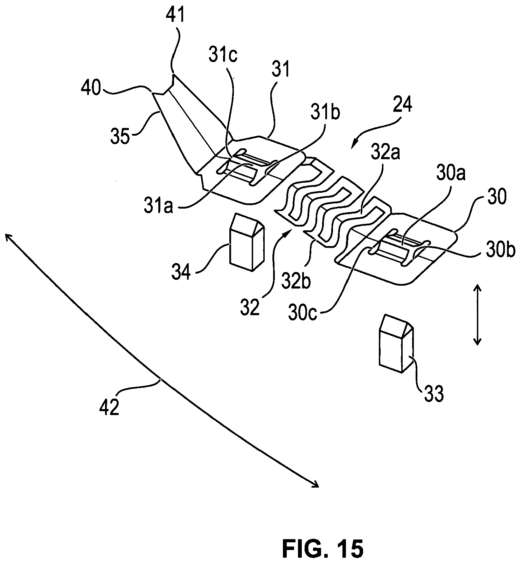

Die Fig. 15 zeigt in dreidimensionaler Ansicht eine Kontaktbrücke 24 mit einem ersten Befestigungsabschnitt 30 und einem zweiten Befestigungsabschnitt 31 sowie einem zwischen diesen angeordneten Brückenelement 32. Sowohl die Befestigungsabschnitte 30, 31 als auch das Brückenelement 32 und ein an dem Befestigungsabschnitt 31 anschließender Kontaktarm 35 sind vorteilhaft einstückig aus einem einzigen Federblech hergestellt, beispielsweise durch Stanzen oder Laserschneiden eines ebenen Federbleches.

Die Befestigungsabschnitte 30, 31 sind jeweils als flächenhafte ebene Abschnitte ausgebildet und weisen jeweils eine durchgehende Klemmöffnung 30a, 31a auf, die jeweils in dem Ausführungsbeispiel als gerader Klemmschlitz ausgebildet ist. An beiden Enden der Klemmschlitze 30a, 31a sind jeweils Trennschlitze 30b, 30c sowie 31b, 31c angeordnet, die jeweils quer, insbesondere senkrecht zu den Klemmschlitzen 30a, 31a verlaufen. Durch die Trennschlitze 30b, 30c, 31b, 31c sind jeweils Randstreifen in den Befestigungsabschnitten 30, 31 gebildet, die parallel neben den jeweiligen Klemmschlitzen verlaufen und aus der Ebene der Befestigungsabschnitte herausgebogen werden können.

Die Kontaktbrücke 24 kann derart auf Klemmdorne 33, 34 aufgesetzt werden, dass diese die Klemmschlitze 30a, 31a unter Aufbiegen der Randbereiche durchsetzen und dort verklemmt werden. Durch die spezielle Gestaltung der Randbereiche werden diese in den Klemmdornen 33, 34 aktiv verhakt, was zu einer besonders großen Stabilität gegenüber Abziehen der Kontaktbrücke 24 von den Klemmdornen führt.

Zwischen den Befestigungsabschnitten 30, 31 ist das Brückenelement 32 vorgesehen, das im Wesentlichen als mäanderförmiger ebener Blechleiter ausgebildet ist, um das Brückenelement möglichst gegenüber allseitigen Bewegungen der Befestigungsabschnitte 30, 31 flexibel zu machen.

Der einzelnen Leiterabschnitte 32a, 32b der mäanderförmigen Leiterführung sind in sich gebogen ausgeführt, um eine möglichst hohe Flexibilität zu erreichen.

An dem zweiten Befestigungsabschnitt 31 schließt sich ein Kontaktarm 35 einstückig an, der an seinem freien Ende Kontaktspitzen 40, 41 aufweist, die im Kontaktierungszustand elastisch gegen die Unterseite der Schirmplatte 17 gedrückt werden. Nach der Montage stellt der Kontaktarm 35 eine federnde elektrisch leitende Verbindung der Kontaktbrücke 24 zu der Schirmplatte 17 her und damit auch einen Kontakt zwischen der Schirmplatte und beispielsweise einem Lagerschild des Elektromotors, an der der Klemmdorn 33 befestigt ist.

An Stelle der Klemmdorne 33, 34 sind auch andere kontaktierende Befestigungsarten der Kontaktbrücke denkbar, wie beispielsweise die Befestigung mittels einer Schraube. Die Befestigung mittels Klemmdornen, auf die die Befestigungsabschnitte aufschiebbar sind, ist jedoch besonders montagefreundlich.

Es ist aus der Fig. 15 ersichtlich, dass die Klemmdorne 33, 34 an ihren freien Enden spitz zulaufen um das Einführen in die Klemmschlitze 30A, 31A zu erleichtern.

Durch die Ausgestaltung der Kontaktbrücke 24 wird eine sichere Verbindung zwischen dem Element, mit dem der erste Befestigungsabschnitt 30 verbunden ist und dem Element mit dem der zweite Befestigungsabschnitt 31 verbunden ist bzw. dem Element, an das der federnde Kontaktarm 25 gepresst ist, hergestellt, unabhängig davon, ob diese Elemente im Rahmen eines Betriebs des Motors beispielsweise vibrieren. Damit kann beispielsweise eine Massenverbindung von einem Masseelement, beispielsweise als Element einer Anschlusseinrichtung, zu einem Lagerschild sicher hergestellt werden.

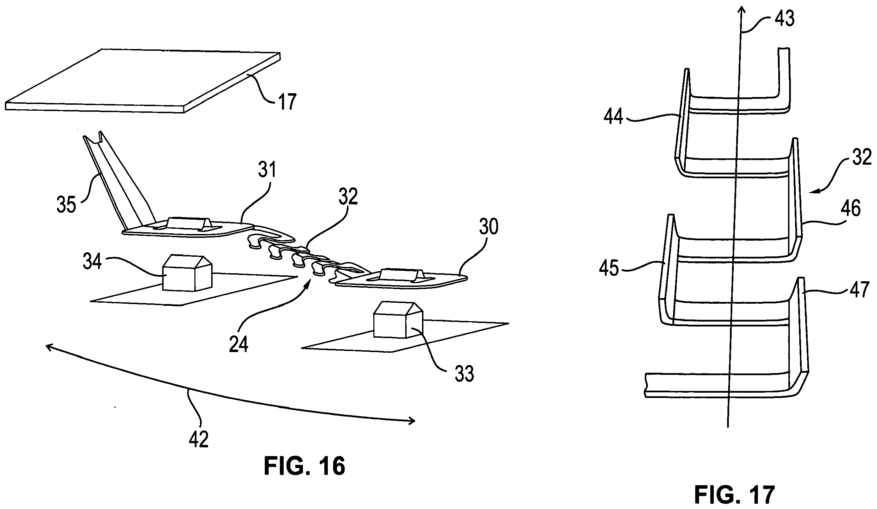

Die Fig. 16 zeigt die Kontaktbrücke 24 aus der Fig. 15 in einer perspektivisch etwas geänderten Ansicht, wobei deutlich wird, dass die Kontaktbrücke 24 aus der Blechebene leicht herausgebogen sein kann, jedoch im Wesentlichen in einer Längsrichtung verläuft, die durch den Doppelpfeil 42 angedeutet ist. der Doppelpfeil 42 ist auch in der Fig. 15 angedeutet. Die Befestigungsabschnitte 30, 31 sind gegenüber dem Brückenelement 32 leicht abgewinkelt. Es sind zudem die Klemmdorne 33, 34 dargestellt.

Fig. 17 zeigt in einer perspektivischen Ansicht das Brückenelement 32 mit mehreren mäanderförmigen Leiterwindungen mit einer Verlaufsrichtung 43 des Brückenelements 32 bzw. der Kontaktbrücke 24. Dabei ist angedeutet, dass die seitlichen, im Wesentlichen in der Verlaufsrichtung 43 des Brückenelements ausgerichteten Leiterabschnitte 44, 45, 46, 47 der mäanderförmigen Leiterführung aus der Ebene der übrigen Leiterabschnitte also der Ebene des Blechs und der Befestigungsabschnitte 30, 31 senkrecht derart herausgebogen sind, dass diese Leiterabschnitte 44, 45, 46, 47 parallel zur Verlaufsrichtung 43 und senkrecht zur Blechebene verlaufen. Die Biegekanten der genannten herausgebogenen Leiterabschnitte sind im Ausführungsbeispiel parallel zur Verlaufsrichtung 43 des Brückenelementes 32.

Dadurch wird in diesem Bereich der genannten herausgebogenen Leiterabschnitte 44, 45, 46, 47 ein seitwärtiges Krümmen des Brückenelementes 32 innerhalb der Ebene des Federblechs, die mit der Ebene der übrigen Leiterabschnitte des Brückenelementes 32 zusammenfällt, erleichtert. Insgesamt wird durch das Vorsehen dieser senkrecht aufgebogenen wangenartigen Leiterabschnitte 44, 45, 46, 47 somit die Flexibilität des Brückenelementes 32 größer.

Durch die geschilderten Maßnahmen und erfindungsgemäßen Merkmale wird damit insgesamt eine zuverlässige und niederohmige Verbindung der auf Massepotential zu bringenden Stator- und Rotorteile sowie der Lagerschilde eines Elektromotors zu einem Masseelement bzw. Masseanschluss verbessert, so dass insgesamt die elektromagnetische Abschirmung der signalbeaufschlagten Windungen der elektrischen Maschine verbessert und die Stabilität gegenüber Spannungsüberschlägen durch eine Masseverbindung mit geringem Widerstand und geringer Impedanz ebenfalls verbessert wird.

### Bezugszeichenliste

- 1: elektrische Maschine
- 2: Mittellinie
- 3, 3': Stator
- 4, 4': Rotor
- 5: Lagerschild
- 6,7: Lager
- 8: Welle
- 9: Stege/Glocke
- 10: Lagerschild
- 11: Lüfterrad
- 12: Ansteuereinrichtung
- 13: Leiterplatte
- 14,15: elektronisches Bauelemente
- 17: Schirmplatte
- 18: umgebördelter Rand
- 19: Anschlusseinrichtung
- 20: Koppelelement
- 21: Schirmkontur
- 22: Blechzunge
- 22a: Druckkontaktstück
- 22b: Flachstück
- 22c: Rastnase
- 22d: Rastöffnung
- 23: Öffnung
- 24: Kontaktbrücke
- 25: Klemmeinrichtung
- 25a: Führungskanal
- 25b: Führungsschiene
- 25c,d: Seitenwange
- 25e: Winkelstück
- 25f: Winkelstück
- 25g: Nase
- 25h: Bauteil
- 25i: Bodenplatte
- 26: Doppelpfeil
- 27: Kontaktfahne
- 28: Rahmen
- 29: Vertiefung
- 30: erster Befestigungsabschnitt
- 30a: Klemmöffnung
- 30b, 30c: Trennschlitze
- 31: zweiter Befestigungsabschnitt
- 31a: Klemmöffnung in 31
- 32b, 32c: Trennschlitze in 31
- 32: Brückenelement
- 32a,32b: gekrümmte Abschnitte
- 33: erster Klemmdorn
- 34: zweiter Klemmdorn
- 35: Kontaktarm
- 36: Kontaktelement
- 37,38: Anschlussleiter
- 39: Blechzunge
- 39a: vorderer Blechstreifen
- 39b: hinterer Blechstreifen
- 39c: Rastnase
- 40,41: Kontaktspitzen
- 42: Doppelpfeil
- 43: Verlaufsrichtung
- 44 - 47: Abschnitte
- 50: Motorgehäuse
- 51: Verbindungsleiter auf Leiterplatte
- 52a, 52b: Wicklung am Stator

## Patentansprüche

1. Rotierende elektrische Maschine, insbesondere Elektromotor (1), mit einem Stator (3, 3') und mit einem Rotor (4, 4') sowie mit einer elektrischen Ansteuereinrichtung (12) und mit einer Anschlusseinrichtung (19), die wenigstens ein Koppelelement (20) zur elektrischen Verbindung der Ansteuereinrichtung (12) mit einer oder mehreren elektrischen Leitungen und ein zur Verbindung mit einem elektrischen Massepotential vorgesehenes Masseelement (28) aufweist,
- wobei der Stator (3, 3') mit dem Masseelement (28) mittels einer Kontaktbrücke (24) verbunden ist, die einen ersten Befestigungsabschnitt (30) und einen zweiten Befestigungsabschnitt (31) sowie ein zwischen diesen angeordnetes, ein einstückiges Federblech aufweisendes Brückenelement (32) aufweist, wobei das Federblech wenigstens teilweise mäanderförmig gestaltet ist, und
- wobei die Kontaktbrücke (24) einen federnden Kontaktarm (35) zur Bildung eines elektrischen Druckkontaktes mit einem Gegenkontakt (17) aufweist.

2. Rotierende elektrische Maschine nach Anspruch 1,
**dadurch gekennzeichnet,**
**dass** das Federblech eine Mehrzahl von aneinander anschließenden gekrümmten Abschnitten (32a, 32b) mit wechselnder Krümmungsrichtung aufweist.

3. Rotierende elektrische Maschine nach Anspruch 1 oder 2,
**dadurch gekennzeichnet,**
**dass** das Brückenelement (32) aus jeweils aneinander anschließenden S-förmigen Elementen und/oder gespiegelt S-förmigen Elementen zusammengesetzt ist.

4. Rotierende elektrische Maschine nach einem der Ansprüche 1 bis 3,
**dadurch gekennzeichnet,**
- **dass** das Brückenelement (32) sich im Wesentlichen als ebenes Federblech in einer ersten Fläche entlang einer Längsrichtung (42, 43) erstreckt, die durch die Verbindungslinie zwischen dem ersten und dem zweiten Befestigungsabschnitt (30, 31) definiert ist, und
- **dass** Abschnitte (44, 45, 46, 47) des Federbleches, die im Wesentlichen in Längsrichtung oder parallel zur Längsrichtung verlaufen, gegenüber den übrigen Abschnitten des Federblechs aus der ersten Fläche heraus um 90° abgewinkelt sind.

5. Rotierende elektrische Maschine nach einem der Ansprüche 1 bis 4,
**dadurch gekennzeichnet,**
**dass** der erste und/oder der zweite Befestigungsabschnitt (30, 31) eine durchgehende Klemmöffnung (30a, 31a), insbesondere einen durchgehenden Klemmschlitz, aufweist, wobei in der Klemmöffnung ein Klemmdorn (33, 34) einklemmbar ist.

6. Rotierende elektrische Maschine nach Anspruch 5,
**dadurch gekennzeichnet,**
**dass** wenigstens ein Befestigungsabschnitt (30, 31) wenigstens einen zu der durchgehenden Klemmöffnung (30a, 31a) hin offenen Trennschlitz (30b, 30c, 31b, 31c) derart aufweist, dass durch den Trennschlitz/die Trennschlitze (30b, 30c, 31b, 31c) wenigstens ein Randbereich der Klemmöffnung (30a, 31a) senkrecht zur Ebene des jeweiligen Befestigungsabschnittes (30, 31) ausbiegbar ist.

7. Rotierende elektrische Maschine nach Anspruch 6,
**dadurch gekennzeichnet,**
- **dass** die durchgehende Klemmöffnung (30a, 31a) ein gerader Klemmschlitz ist,
- **dass** an beiden Enden des Klemmschlitzes (30a, 31a) jeweils wenigstens ein mit dem Klemmschlitz verbundener Trennschlitz (30b, 30c, 31b, 31c) vorgesehen ist, und
- **dass** zwischen den Trennschlitzen (30b, 30c, 31b, 31c) jeweils ein biegbarer Randstreifen gebildet ist.

8. Rotierende elektrische Maschine nach Anspruch 7,
**dadurch gekennzeichnet,**
**dass** der federnde Kontaktarm (35) an einem Gegenkontakt an einer Leiterplatte (13) der Ansteuereinrichtung (12) und/oder an einer zwischen der Ansteuereinrichtung (12) und dem Stator (3, 3') angeordneten Metallplatte (17) anliegt.

9. Rotierende elektrische Maschine nach einem der Ansprüche 1 bis 8,
**dadurch gekennzeichnet,**
**dass** der Stator (3, 3') und der Rotor (4, 4') zumindest teilweise auf Massepotential sind.

10. Bürstenlose rotierende elektrische Maschine nach einem der Ansprüche 1 bis 9.

11. Kontaktbrücke einer rotierenden elektrischen Maschine nach einem der Ansprüche 1 bis 10 mit einem ersten und einem zweiten Befestigungsabschnitt (30, 31) sowie mit einem zwischen diesen angeordneten, mäanderförmig gestalteten Federblech (24) zur Herstellung einer elektrisch leitenden Verbindung, und mit einem federnden Kontaktarm (35) zur Bildung eines elektrischen Druckkontaktes mit einem Gegenkontakt (17).

## Claims

1. Rotary electric machine, in particular electric motor (1), having a stator (3, 3') and having a rotor (4, 4') and having an electric control device (12) and having a connector (19) that has at least one coupling element (20) for electrically connecting the control device (12) to one or more electrical lines and a ground element (28) provided for connection to an electric ground potential,
- wherein the stator (3, 3') is connected to the ground element (28) by means of a contact bridge (24) that has a first fixing section (30) and a second fixing section (31) and a bridge element (32) arranged between the first and second fixing sections (30, 31), said bridge element (32) having a single-piece spring sheet, wherein the spring sheet is formed to be at least partially meander-shaped, and
- wherein the contact bridge (24) has a spring contact arm (35) for forming an electrical pressure contact with a counter contact (17).

2. Rotary electric machine according to claim 1,
**characterised in that**
the spring sheet has a plurality of adjoining curved sections (32a, 32b) with a changing curvature direction.

3. Rotary electric machine according to claim 1 or 2,
**characterised in that**
the bridge element (32) is made up in each case of adjoining S-shaped elements and/or mirrored S-shaped elements.

4. Rotary electric machine according to one of claims 1 to 3,
**characterised in that**
- the bridge element (32) extends substantially as a planar spring sheet in a first surface along a longitudinal direction (42, 43) that is defined by the connection line between the first and the second fixing section (30, 31), and
- sections (44, 45, 46, 47) of the spring sheet, which run substantially in the longitudinal direction or parallel to the longitudinal direction, are angled by 90° out of the first surface relative to the other sections of the spring sheet.

5. Rotary electric machine according to one of claims 1 to 4,
**characterised in that**
the first and/or the second fixing section (30, 31) has a continuous clamping opening (30a, 31a), in particular a continuous clamping slot, wherein a clamping pin (33, 34) can be clamped in the clamping opening.

6. Rotary electric machine according to claim 5,
**characterised in that**
at least one fixing section (30, 31) has at least one separation slot (30b, 30c, 31b, 31c) which is open towards the continuous clamping opening (30a, 31a) in such a way that at least one edge region of the clamping opening (30a, 31a) can be bent out perpendicular to the plane of the respective fixing section (30, 31) because of the separation slot/separation slots (30b, 30c, 31b, 31c).

7. Rotary electric machine according to claim 6,
**characterised in that**
- the continuous clamping opening (30a, 31a) is a straight clamping slot,
- at both ends of the clamping slot (30a, 31a), in each case, at least one separation slot (30b, 30c, 31b, 31c) connected to the clamping slot is provided, and
- in each case, a bendable edge strip is formed between the separation slots (30b, 30c, 31b, 31c).

8. Rotary electric machine according to claim 7,
**characterised in that**
the spring contact arm (35) abuts on a counter contact on a circuit board (13) of the control device (12) and/or on a metal plate (17) arranged between the control device (12) and the stator (3, 3').

9. Rotary electric machine according to one of claims 1 to 8,
**characterised in that**
the stator (3, 3') and the rotor (4, 4') are at least partially at ground potential.

10. Brushless rotary electric machine according to one of claims 1 to 9.

11. Contact bridge of a rotary electric machine according to one of claims 1 to 10, having a first and a second fixing section (30, 31) and having a meander-shaped spring sheet (24) arranged between the first and second fixing sections (30, 31) for producing an electrically conductive connection, and having a spring contact arm (35) for forming an electrical pressure contact with a counter contact (17).

## Revendications

1. Machine électrique tournante, en particulier un moteur électrique (1), comprenant un stator (3, 3') et un rotor (4, 4'), ainsi qu'un dispositif de commande électrique (12) et un dispositif de raccordement (19) qui est muni d'au moins un élément de couplage (20) pour la connexion électrique du dispositif de commande (12) à une ou plusieurs lignes électriques et d'un élément de masse (28) prévu pour la connexion à un potentiel de masse électrique
- le stator (3, 3') étant connecté à l'élément de masse (28) par le biais d'un pont de contact (24) qui est muni d'un premier segment de fixation (30) et d'un deuxième segment de fixation (31) ainsi que d'un élément de pont (32) disposé entre ces segments et muni d'une tôle élastique à ressort monobloc formant au moins partiellement des méandres, et
- le pont de contact (24) étant muni d'un bras de contact à effet ressort (35) pour établir un contact électrique à pression avec un contact opposé (17).

2. Machine électrique tournante selon la revendication 1, **caractérisée en ce que** la tôle élastique à ressort est munie d'une pluralité de segments courbes (32a, 32b) adjacents entre eux avec des directions de courbure alternées.

3. Machine électrique tournante selon la revendication 1 ou 2, **caractérisée en ce que** l'élément de pont (32) est constitué d'éléments en forme de S adjacents entre eux et/ou d'éléments miroir en forme de S.

4. Machine électrique tournante selon l'une des revendications 1 à 3, **caractérisée**
- **en ce que** l'élément de pont (32) s'étend sensiblement comme une tôle élastique à ressort plane dans une première surface le long d'une direction longitudinale (42, 43) définie par la ligne de connexion entre le premier et le deuxième segment de fixation (30, 31), et
- **en ce que** des segments (44, 45, 46, 47) de la tôle élastique à ressort qui s'étendent sensiblement dans la direction longitudinale ou parallèlement à la direction longitudinale, sont inclinées par rapport aux autres segments de la tôle élastique à ressort de 90° par rapport à la première surface.

5. Machine électrique tournante selon l'une des revendications 1 à 4, **caractérisée en ce que** le premier et/ou le deuxième segment de fixation (30, 31) sont munis d'une ouverture de blocage (30a, 31a) traversante, en particulier une fente de blocage traversante, une broche de blocage (33, 34) pouvant être bloquée dans l'ouverture de blocage.

6. Machine électrique tournante selon la revendication 5, **caractérisée en ce qu**'au moins un segment de fixation (30, 31) est muni d'au moins une fente de séparation (30b, 30c, 31b, 31c) ouverte vers l'ouverture de blocage traversante (30a, 31a) de telle sorte qu'au moins une région de bord de l'ouverture de blocage (30a, 31a) peut être courbée perpendiculairement au plan du segment de fixation (30, 31) correspondant grâce à la ou les fentes de séparation (30b, 30c, 31b, 31c).

7. Machine électrique tournante selon la revendication 6, **caractérisée**
- **en ce que** l'ouverture de blocage traversante (30a, 31a) est une fente de blocage droite,
- **en ce qu'**à chacune des deux extrémités de la fente de blocage (30a, 31a) au moins une fente de séparation (30b, 30c, 31b, 31c) reliée à la fente de blocage est prévue, et
- **en ce qu'**une bande de bord pliable est formée entre chacune des fentes de séparation (30b, 30c, 31b, 31c).

8. Machine électrique tournante selon la revendication 7, **caractérisée en ce que** le bras de contact à effet ressort (35) repose contre un contact opposé sur une carte de circuit imprimé (13) du dispositif de commande (12) et/ou contre une plaque métallique (17) placée entre le dispositif de commande (12) et le stator (3, 3').

9. Machine électrique tournante selon l'une des revendications 1 à 8, **caractérisée en ce que** le stator (3, 3') et le rotor (4, 4') sont au moins partiellement au potentiel de masse.

10. Machine électrique tournante sans balais selon l'une des revendications 1 à 9.

11. Un pont de contact d'une machine électrique tournante selon l'une des revendications 1 à 10, comprenant un premier et un deuxième segment de fixation (30, 31) ainsi qu'une tôle élastique à ressort (24) en forme de méandre disposée entre ces segments pour établir une connexion électriquement conductrice, et avec un bras de contact (35) pour établir un contact électrique à pression avec un contact opposé (17).
